# DEMANDE DE BREVET EUROPEEN

(11) **EP 3 546 612 A1**
(43) Date de publication de la demande: **02.10.2019**
(21) Numéro de dépôt: 19157497.9
(22) Date de dépôt: 15.02.2019
(51) Int. Cl.: C22C 38/58, C22C 38/44, C22C 38/00, C22C 38/02, C22C 14/00, C22C 29/10, C22C 29/16, C22C 38/50, C23C 4/06, C23C 4/10, C23C 4/12, B22F 3/105, B22F 3/115, B22F 7/04, C22C 1/05, C22C 33/02, C23C 4/08

(54) **COMPOSITION AMELIOREE POUR LA FORMATION D'ALLIAGES DURS**

(30) Priorité: 16.02.2018 FR 1851362
(71) Demandeur: Velan S.A.S., 69007 Lyon (FR); Ecole Nationale Supérieure d'Arts et Métiers (ENSAM), 75013 Paris (FR); Centre National de la Recherche Scientifique - CNRS, 75016 Paris (FR); Conservatoire National des Arts et Métiers (CNAM), 75141 Paris Cedex 03 (FR); AMVALOR, 75013 Paris (FR)
(72) Inventeur: CREPIN, Nicolas, 38540 VALENCIN (FR); MAZEL, Jean-Luc, 69340 FRANCHEVILLE (FR); CONFORT, Xavier, 69510 THURINS (FR); PEYRE, Patrice, 91510 JANVILLE-SUR-JUINE (FR); ABOUDA BOUROUROU, Emna, 42100 SAINT-ETIENNE (FR)
(74) Mandataire: Weber, Jean-François

(57) **Abrégé**

- Composition améliorée pour la formation d'alliages durs.
- L'invention concerne une composition pour la formation d'un alliage dur, à base fer et sans cobalt, constituée d'une première composante consistant, en masse, en 0,7 à 1,5 % de carbone, 2,2 à 4 % de silicium, 20 à 30 % de chrome, 3,0 à 6,0 % de manganèse, 3,7 à 5,0 % de nickel, 1,7 à 4 % de molybdène, moins de 0,3 % d'azote, la quantité restante consistant, à l'exception des impuretés, en fer ; et d'une deuxième composante comprenant du titane.
- Alliages durs, revêtements et pièces en alliage dur.

## Description

De manière générale, l'invention se rapporte aux domaines techniques respectifs des compositions pour la formation d'alliages durs, des alliages durs, des procédés de formation de revêtements en alliage dur, des revêtements en alliage dur, ainsi que des pièces massives formées en alliage dur.

L'invention concerne plus précisément une composition pour la formation d'un alliage dur sans cobalt.

L'invention concerne également un alliage dur sans cobalt.

L'invention concerne également un procédé de formation d'un revêtement dur en alliage sans cobalt à la surface d'un substrat.

L'invention concerne en outre un revêtement en alliage dur, ainsi qu'une pièce massive en alliage dur.

On connaît déjà, dans différents secteurs industriels, des alliages de revêtement dur, c'est-à-dire des alliages métalliques aptes à former des revêtements de grande dureté, et destinés à protéger la surface de pièces mécaniques soumises à des contraintes mécaniques et thermiques importantes (pressions, températures élevées, fatigue, impact, contraintes résiduelles, etc.). De tels revêtements permettent ainsi notamment d'améliorer la résistance à l'usure et à la corrosion des pièces considérées.

En particulier, il est connu dans l'industrie nucléaire de recourir à de tels alliages de revêtement dur au niveau des sièges d'étanchéité des équipements de robinetterie, tels que des vannes ou des robinets, en particulier au niveau du circuit primaire de réacteurs nucléaires. En effet, de tels équipements doivent résister, en fonctionnement, à des sollicitations mécaniques et thermiques particulièrement élevées, typiquement à sous une contrainte mécanique de 150 MPa ou plus et à une température allant jusqu'à 350-400°C.

Classiquement, le cobalt forme la base de tels alliages connus. De tels alliages de revêtement dur à base cobalt permettent de conférer aux surfaces traitées des propriétés mécaniques tout à fait intéressantes, en particulier en termes de résistance à l'usure et à la corrosion, de dureté et de limitation du risque de grippage. Cependant, il a été observé que le cobalt présent dans l'alliage formant le revêtement est susceptible d'être relargué par divers mécanismes (corrosion, érosion, usure ou encore rodage) et de s'activer sous flux neutronique. Il se transforme alors en ⁶⁰Co, un radio-isotope du cobalt qui présente une longue période radioactive et un rayonnement très énergétique. Il en résulte une contamination radioactive des équipements, rendant plus complexes et dangereuses, pour le personnel de maintenance, les opérations d'inspection, de réparation ou de remplacement de ces derniers.

C'est la raison pour laquelle il a été proposé de remplacer ces alliages durs à base cobalt par des alliages sans cobalt, par exemple à base fer ou à base nickel. Si de tels alliages alternatifs offrent globalement satisfaction, ils s'avèrent cependant perfectibles, notamment en termes de résistance à l'usure et au grippage à haute température. Il en résulte une usure prématurée et problématique des pièces et équipements concernés.

Les objets assignés à la présente invention visent en conséquence à remédier aux différents inconvénients énumérés précédemment et à proposer une nouvelle composition pour la formation d'un alliage dur et un nouvel alliage dur, qui tout en étant dépourvus de cobalt, permettent de conférer à une pièce mécanique pourvue d'un revêtement formé en un tel alliage dur d'excellentes propriétés mécaniques, et en particulier tribologiques, notamment en environnement très sévère (par exemple nucléaire).

Un autre objet de l'invention vise à proposer une nouvelle composition pour la formation d'un alliage dur et un nouvel alliage dur, qui permettent la fabrication de pièces massives présentant d'excellentes propriétés mécaniques, et en particulier tribologiques, notamment en environnement très sévère.

Un autre objet de l'invention vise à proposer une nouvelle composition pour la formation d'un alliage dur et un nouvel alliage dur particulièrement bien adaptés à une mise en oeuvre pour la fabrication et la protection d'équipements de robinetterie pour application nucléaire.

Un autre objet de l'invention vise à proposer une nouvelle composition pour la formation d'un alliage dur, qui est de fabrication et de mise en oeuvre aisée.

Un autre objet de l'invention vise à proposer un nouvel alliage dur sans cobalt, qui est particulièrement résistant au grippage à haute température.

Un autre objet de l'invention vise à proposer un nouveau procédé de formation d'un revêtement dur en alliage sans cobalt à la surface d'un substrat, qui est particulièrement simple et peu onéreux à mettre en oeuvre en contexte industriel.

Un autre objet de l'invention vise à proposer un nouveau procédé de formation d'un revêtement dur, qui permet de réaliser des dépôts épais et précis, même sur des substrats de géométrie complexe.

Les objets assignés à l'invention sont atteints à l'aide d'une composition pour la formation d'un alliage dur, à base fer et sans cobalt, constituée d'une première composante consistant, en masse, en 0,7 à 1,5 % de carbone, 2,2 à 4,0 % de silicium, 20 à 30 % de chrome, 3,0 à 6,0 % de manganèse, 3,7 à 5,0 % de nickel, 1,7 à 4 % de molybdène, moins de 0,3 % d'azote, la quantité restante consistant, à l'exception des impuretés, en fer ; et d'une deuxième composante comprenant du titane.

Les objets assignés à l'invention sont également atteints à l'aide d'un alliage dur, à base fer et sans cobalt, comprenant en masse de 0,7 à 1,5 % de carbone, de 2,2 à 4,0 % de silicium, de 20 à 30 % de chrome, de 3,0 à 6,0 % de manganèse, de 3,7 à 5,0 % de nickel, de 1,7 à 4,0 % de molybdène, moins de 0,3 % d'azote, et du titane.

Les objets assignés à l'invention sont également atteints à l'aide d'un procédé de formation d'un revêtement dur en alliage sans cobalt à la surface d'un substrat métallique à partir d'une composition conforme à celle susvisée.

Les objets assignés à l'invention sont également atteints à l'aide d'un revêtement en alliage dur, anti-usure et anti-grippage, formé en un alliage conforme à ce qui précède.

Les objets assignés à l'invention sont atteints, en outre, à l'aide d'une pièce massive en alliage dur, formée en un alliage conforme à ce qui précède.

D'autres particularités et avantages de l'invention apparaîtront et ressortiront plus en détails à la lecture de la description faite ci-après, en référence aux figures annexées, donnés uniquement à titre d'exemple illustratif et non limitatif.

En l'espèce, les figures proposées illustrent certaines observations issues d'essais et d'analyses réalisés en lien avec un mode de réalisation particulier de l'invention. Elles visent en particulier à comparer certaines propriétés mécaniques d'un revêtement dur réalisé en conformité avec l'invention, avec celles d'un revêtement dur témoin obtenu à partir d'une composition ne contenant pas de titane.

En particulier, la figure 1 représente une image prise au microscope électronique à balayage d'une composition, conforme à l'invention, qui se présente sous la forme d'un mélange d'une première poudre d'alliage et d'une deuxième poudre. La figure 2 consiste en des images prises au microscope électronique à balayage, permettant notamment de mettre en évidence certaines caractéristiques de la matrice d'un alliage de revêtement dur obtenu conformément à l'invention. La figure 3 illustre des courbes de contrainte-déformation obtenues à l'issue d'essais comparatifs de traction. Les figures 4 et 5 illustrent des courbes d'évolution de coefficients de frottement en fonction du temps, issues de tests tribologiques comparatifs menés à haute température. Enfin, la figure 6 illustre des vues en coupe transversale de traces d'usure, obtenues par diffraction d'électrons rétrodiffusés EBSD.

Selon un premier aspect, l'invention concerne une nouvelle composition pour la formation, la fabrication d'un alliage dur. Selon un mode de réalisation préférentiel de l'invention, cette composition constitue avantageusement un matériau d'apport destiné à être déposé et lié (par exemple par fusion, diffusion, etc.) à la surface d'un substrat métallique pour former sur ce dernier (par exemple, après fusion et après refroidissement) un alliage de revêtement dur (dépôt dur), autrement dit un revêtement dur constitué d'un alliage. Un tel alliage de revêtement dur est avantageusement destiné à recouvrir (eu moins de partie) des pièces ou composants de robinetterie industrielle, tels que par exemple des sièges d'étanchéité de vannes ou de robinets, en particulier pour applications nucléaires, afin d'en améliorer sensiblement la résistance, tant mécanique (résistance à l'usure et au grippage (éraillure), résistance aux chocs thermiques et mécaniques) que chimique (résistance à la corrosion).

Selon un autre mode de réalisation, ladite composition peut constituer une matière première pour la fabrication d'une pièce massive métallique (ou produit métallurgique), telle que par exemple une soupape, un obturateur, etc. En effet, il peut parfois s'avérer plus intéressant de former intégralement et directement (par exemple par fonderie ou par frittage) une pièce métallique en alliage dur, en particulier dans le cas d'une pièce de faibles dimensions, plutôt que de recourir à une protection surfacique de cette dernière par dépôt dur.

Plus spécifiquement, l'invention concerne une composition pour la formation d'un alliage dur à base fer et sans cobalt, avantageusement doté de propriétés anti-usure et anti-grippage (anti-éraillure). En d'autres termes, il s'agit d'un alliage métallique, affectant avantageusement la forme d'un dépôt dur, plus ou moins épais, à la surface d'un substrat donné ou bien une forme massive, dont le fer constitue l'élément métallique majoritaire en masse, et qui est sensiblement dépourvu de cobalt. On notera ici que l'expression « *sans cobalt* » renvoie, dans le contexte de l'invention, à une teneur en cobalt avantageusement inférieure ou égale à 0,06 % en masse, voire idéalement nulle. Ainsi, la composition selon l'invention comprend avantageusement au plus 0,06 % en masse de cobalt, en tant qu'impureté.

La composition selon l'invention est constituée d'une première composante et d'une deuxième composante, lesquelles peuvent être distinctes ou indissociables, comme on le verra ci-après.

Selon l'invention, ladite première composante consiste, en masse, en :
0,7 à 1,5 % de carbone,
2,2 à 4,0 % de silicium,
20 à 30 % de chrome,
3,0 à 6,0 % de manganèse,
3,7 à 5,0 % de nickel,
1,7 à 4,0 % de molybdène,
moins de 0,3 % d'azote,
la quantité restante consistant, à l'exception des impuretés, en fer.

En l'espèce, les impuretés en question consistent de préférence, en masse de ladite première composante, en moins de 0,02 % de phosphore, moins de 0,01 % de soufre, moins de 0,06 % de bore et moins de 200 ppm d'oxygène.

Les proportions massiques présentées ci-dessus sont avantageusement choisies en regard des propriétés qu'elles contribuent à conférer à l'alliage dur qui peut être formé à partir de la composition selon l'invention. Le nickel et le manganèse, en des proportions massiques respectivement comprises entre 3,7 et 5,0 % et entre 3,0 et 6,0 % en masse, contribuent à favoriser l'obtention d'un alliage dur à matrice austénitique. Le manganèse permet en outre avantageusement de réduire l'énergie de faute d'empilement et d'augmenter la solubilité de l'azote dans la matrice de l'alliage. Une teneur élevée en chrome, comprise entre 20 à 30 % en masse permet de conférer à l'alliage une bonne résistance à la corrosion primaire. Le choix de la teneur en silicium, entre 2,2 à 4,0 % en masse, repose avantageusement sur la recherche d'un compromis entre le renforcement de la solution solide que le silicium confère à l'alliage obtenu et une bonne ténacité de ce dernier (en particulier aux chocs thermiques et mécaniques). Le molybdène, entre 1,7 et 4,0 % en masse, contribue quant à lui à conférer à l'alliage une bonne résistance à la corrosion par piqûration. Dans une proportion massique inférieure à 0,3 %, l'azote contribue avantageusement au renforcement de la solution solide.

De préférence, la première composante consiste, en masse, en :
0,7 à 1,35 % de carbone,
2,2 à 3,5 % de silicium,
20 à 26 % de chrome,
3,0 à 5,0 % de manganèse,
3,7 à 5,0 % de nickel,
1,7 à 2,2 % de molybdène,
moins de 0,18 % d'azote,
la quantité restante consistant, à l'exception des impuretés évoquées précédemment, en fer.

De préférence encore, la première composante consiste, en masse, en :
1,1 à 1,35 % de carbone,
3,1 à 3,5 % de silicium,
23 à 26 % de chrome,
4,0 à 5,0 % de manganèse,
3,7 à 5,0 % de nickel,
1,8 à 2,2 % de molybdène,
moins de 0,18 % d'azote,
la quantité restante consistant, à l'exception des impuretés évoquées précédemment, en fer.

Un tel choix préférentiel permet d'améliorer les propriétés mécaniques, et en particulier tribologiques (dont la résistance au grippage / éraillure) de l'alliage dur qui peut être formé à partir de la composition selon l'invention. On relèvera notamment à ce titre que des pourcentages élevés en chrome (20 à 26 %, et de préférence 23 à 26 %) et en carbone (0,7 à 1,35 %, et de préférence 1,1 à 1,35 %) favorisent la précipitation des carbures. Le taux élevé de chrome permet avantageusement d'éviter sa déplétion dans la matrice lors d'éventuels traitements thermiques, susceptible de conduire à un phénomène de sensibilisation des zones affectées thermiquement (ZAT) et à de la corrosion intergranulaire. En tant que telle, une telle première composante permet avantageusement de former un alliage dur renforcé par des carbures implantés dans une matrice austénitique présentant une excellente résistance à la corrosion.

Comme on le relèvera à la lecture de ce qui précède, ladite première composante de la composition selon l'invention est avantageusement dépourvue des éléments suivants : plomb, mercure, étain, zinc, cadmium, antimoine, argent, aluminium, bismuth, arsenic, cuivre, terres rares, gallium et indium. On limite ainsi avantageusement le risque de corrosion, de pollution de fluide, ou encore de contamination radioactive dans le contexte d'une application nucléaire.

La deuxième composante de la composition selon l'invention comprend quant à elle du titane. L'invention repose ainsi avantageusement sur l'idée d'améliorer encore, par l'ajout de titane, les propriétés mécaniques que la première composante décrite ci-dessus confèrerait à un alliage dur qui serait formé à partir d'elle seule. De préférence, ladite deuxième composante consiste, à l'exception des inévitables impuretés, en du titane (titane métal), du nitrure de titane ou du carbure de titane (voire en une combinaison de ces derniers).

En effet, il a été observé que le titane, en tant qu'élément alphagène, est susceptible de modifier significativement la microstructure d'un alliage dur qui serait formé à partir d'une composition consistant uniquement en la première composante décrite ci-avant, et ce même en de très faibles proportions. En particulier, le titane contribue, lorsqu'il est ajouté à une première composante conforme à ce qui précède, à l'obtention d'un alliage dont la microstructure présente avantageusement une matrice austénitique possédant une phase ferritique et des carbures eutectiques. On observe également avantageusement l'obtention d'une microstructure particulièrement fine, avec des grains présentant avantageusement une taille inférieure ou égale à 5 µm et des carbures très fins au niveau de la zone interdendritique, et un renforcement général de la matrice. Egalement, l'ajout de titane à ladite première composante favorise l'obtention d'un alliage dur à matrice dendritique équiaxe ou globulaire. En jouant un rôle inoculant, le titane permet d'éviter une croissance dendritique selon des directions privilégiées. Un tel caractère équiaxe ou globulaire facilite une distribution plus homogène des contraintes appliquées sur toutes les particules dures dans la microstructure et réduit considérablement la propagation des fissures. *In fine,* il a été observé qu'une composition conforme à l'invention permet avantageusement de former un alliage dur qui présente des propriétés mécaniques et tribologiques (dureté, ductilité, résistance à l'usure et au grippage) particulièrement intéressantes.

Les essais menés au cours du développement de la présente invention ont permis d'identifier un effet très avantageux de la mise en oeuvre de titane lorsque la deuxième composante est préférentiellement présente au sein de la composition selon l'invention en une quantité telle que l'alliage dur formé à partir de ladite composition comprend, en masse, entre 0,04 et 1 % de titane, de préférence entre 0,04 et 0,2 %, et de préférence encore entre 0,07 et 0,2 %. Le titane représente donc préférentiellement au moins 0,04%, et de préférence encore au moins 0,07 %, en masse de la composition totale.

Il est ici à noter que, dans le cas préférentiel où l'alliage dur est formé, déposé, sous la forme d'un revêtement à la surface d'un substrat métallique, les proportions massiques qui précèdent sont préférentiellement à considérer en une zone du revêtement située à distance de la zone de dilution éventuellement présente au voisinage de la surface du substrat.

De manière générale, il est préférable d'éviter que la teneur finale de l'alliage dur en titane ne dépasse 1 %, afin de conserver au maximum les propriétés avantageuses conférées à ce dernier par la formulation respective de la première composante.

Afin d'obtenir de telles teneurs avantageuses de l'alliage en titane, il convient bien évidemment de moduler la proportion massique de la deuxième composante au sein de la composition selon l'invention en fonction de l'application visée (revêtement ou pièce massive) et du procédé utilisé pour la formation de l'alliage dur en question à partir de ladite composition. Typiquement, ladite deuxième composante pourra représenter entre 0,04 et 3 %, voire entre 0,04 et 2 % en masse de ladite composition, pour tenir compte des éventuelles pertes de titane liés au procédé utilisé. On comprend que, dans le cas où le procédé utilisé n'a pas d'impact notable sur la teneur en titane entre la composition de départ et l'alliage de revêtement dur obtenu *in fine,* ladite deuxième composante pourra avantageusement être présente en une quantité allant de 0,04 à 1 % en masse de la composition. Un exemple plus précis sera proposé plus loin, en lien avec un cas préférentiel où la composition selon l'invention est mise en oeuvre à l'aide d'un procédé de projection laser. La teneur en titane de l'alliage dur obtenue à partir de ladite composition peut être aisément contrôlée, au besoin de manière itérative, à l'aide de toute méthode de caractérisation connue et adaptée à l'analyse des alliages à base fer (technique par fluorescence des rayons X (XRF), etc.).

Selon une variante préférentielle, la composition se présente sous la forme d'un mélange d'une première poudre d'alliage et d'une deuxième poudre, dont les grains respectifs sont constitués desdites première et deuxième composantes. En d'autres termes, la première composante est alors formée d'un alliage métallique des éléments de la première composante évoqués ci-avant, sous forme de poudre. Cette dernière peut, par exemple, être obtenue par atomisation de l'alliage métallique en question. Avantageusement, la taille moyenne des grains de ladite première poudre sera choisie sensiblement comprise entre 50 et 150 µm. La deuxième composante est quant à elle constituée d'une poudre de titane ou à base de titane. Avantageusement, la composition selon cette première variante correspond à une composition formée d'un mélange d'une poudre d'un alliage connu sous l'appellation commerciale NOREM® (marque déposée) et d'une poudre de titane ou à base de titane. Plus avantageusement encore, il s'agit d'une composition formée d'un mélange d'une poudre d'un alliage NOREM® de nuance NOREM 02® ou NOREM 02A® et d'une poudre de titane. Une telle composition présente notamment l'intérêt d'être relativement facile à fabriquer, à partir de première et deuxième composantes couramment disponibles sur le marché. Le mélange desdites première et deuxième poudres peut avantageusement être réalisé par voie sèche à l'aide d'un agitateur tridimensionnel, par exemple de type Turbula® (marque déposée), afin d'obtenir un mélange particulièrement homogène bien que de composition hétérogène (grains de taille et nature différentes).

De préférence, ladite deuxième composante consiste, à l'exception des impuretés, en du titane (titane métal Ti). La deuxième composante comprend donc alors uniquement du titane métal Ti, à l'exception d'inévitables impuretés dont la teneur ne dépasse pas, en tout état de cause, 2 %. Avantageusement, le titane sera choisi d'une pureté supérieure ou égale à 99 %. De préférence, ladite deuxième poudre de titane consiste, en masse, en 0,2 à 0,5 % de fer, 0,08 % de carbone, 0,03 à 0,05 % d'azote, 0,18 à 0,40 % d'oxygène, 0,01 % d'hydrogène, la quantité massique restante consistant en du titane. Une telle poudre de titane peut, par exemple, être obtenue par procédé d'hydrogénation / déshydrogénation (HDH) de titane spongieux. Avantageusement, la taille moyenne des grains de ladite deuxième poudre sera choisie sensiblement comprise entre 10 µm et 20 µm, de préférence entre 11 µm et 20 µm.

De préférence, ladite deuxième composante est présente en une quantité allant de 0,04 à 1 % en masse de ladite première composante, de préférence de 0,2 à 1,0 %, et de préférence encore de 0,2 à 0,6 %. Les travaux entrepris montrent qu'un optimum est avantageusement atteint lorsque ladite deuxième composante est présente en une quantité de 0,4 % en masse de ladite première composante, en particulier dans le cas où la deuxième composante comprend uniquement du titane métal Ti, pur à au moins 99 %.

Alternativement, comme évoqué ci-avant, le titane de ladite deuxième composante pourra être sous forme de carbure de titane, de nitrure de titane. Cependant, il a été observé que de telles formes conduisent à des résultats moins intéressants que ceux obtenus grâce à du titane métal, du fait qu'elles augmentent la teneur générale en carbone ou en azote de la composition selon l'invention (i.e. la teneur générale en carbone ou en azote conférée à ladite composition par ladite première composante de cette dernière).

Selon une autre variante, la composition selon l'invention peut se présenter sous la forme d'une poudre d'alliage, dont chaque grain est constitué d'un mélange desdites première et deuxième composantes. En d'autres termes, lesdites première et deuxième composantes de la composition selon l'invention sont alors indissociables, étant avantageusement intimement combinées pour former ensemble un seul et même alliage métallique poudreux comprenant l'ensemble de leurs éléments constitutifs respectifs. La composition selon l'invention se présente ainsi avantageusement sous la forme d'une poudre pré-alliée. La mise en oeuvre d'une telle composition s'en trouve ainsi simplifiée et fiabilisée.

La forme poudreuse, qui vient d'être évoquée, de la composition selon l'invention, est particulièrement bien adaptée à la mise en oeuvre de cette dernière par un procédé de projection laser notamment, comme on le verra ci-après, ou encore par frittage. Bien évidemment, il est envisageable que ladite composition se présente, alternativement encore, sous une forme massive, et par exemple sous la forme d'une tige ou d'une baguette, de sorte à être adaptée à sa mise en oeuvre par un procédé TIG (« *Tungsten Inert Gas* »).

Selon un autre aspect, l'invention concerne en tant que tel un alliage dur, à base fer et sans cobalt. De préférence, ledit alliage dur est formé à partir de la composition selon l'invention, telle que décrite ci-dessus. Selon l'invention, ledit alliage dur comprend, en masse, de 0,7 à 1,5 % de carbone, de 2,2 à 4,0 % de silicium, de 20 à 30 % de chrome, de 3,0 à 6,0 % de manganèse, de 3,7 à 5,0 % de nickel, de 1,7 à 4,0 % de molybdène, moins de 0,3 % d'azote, et du titane.

De préférence, ledit alliage comprend, en masse, de 0,7 à 1,35 % de carbone, de 2,2 à 3,5 % de silicium, de 20 à 26 % de chrome, de 3,0 à 5,0 % de manganèse, de 3,7 à 5,0 % de nickel, de 1,7 à 2,2 % de molybdène, moins de 0,18 % d'azote, et du titane. De préférence encore, ledit alliage comprend, en masse, de 1,1 à 1,35 % de carbone, de 3,1 à 3,5 % de silicium, de 23 à 26 % de chrome, de 4,0 à 5,0 % de manganèse, de 3,7 à 5,0 % de nickel, de 1,7 à 2,2 % de molybdène, moins de 0,18 % d'azote et du titane. De manière plus préférentielle encore, ledit alliage comprend, en masse, de 1,1 à 1,35 % de carbone, de 3,1 à 3,5 % de silicium, de 23 à 26 % de chrome, de 4,0 à 5,0 % de manganèse, de 3,7 à 5,0 % de nickel, de 1,8 à 2,2 % de molybdène, moins de 0,18 % d'azote et du titane.

De préférence, le titane est présent dans l'alliage dur selon l'invention en une quantité allant de 0,04 à 1 % en masse, de préférence encore en une quantité allant de 0,04 à 0,2 % en masse, pour les raisons déjà évoquées en lien avec la composition selon l'invention.

Dans le cas préférentiel où l'alliage dur est formé, déposé, sous la forme d'un revêtement à la surface d'un substrat métallique, les proportions massiques qui précèdent sont de préférence à considérer en une zone du revêtement située à distance de la zone de dilution éventuellement présente au voisinage de la surface du substrat.

Avantageusement, ledit alliage présente une microstructure dentritique équiaxe ou globulaire, qui comprend une matrice austénitique possédant une phase ferritique, de préférence sous forme d'ilots de ferrite δ, et des carbures eutectiques.

Avantageusement, le titane est présent, au sein dudit alliage, sous forme (en particulier) de carbures de titane, qui sont répartis de manière (sensiblement) homogène au sein de la microstructure de l'alliage, renforçant ainsi de manière homogène cette dernière.

L'invention concerne également, en tant que tel, un procédé de formation d'un revêtement dur en alliage sans cobalt à la surface d'un substrat métallique, tel que par exemple un élément mécanique de robinetterie industrielle. Selon l'invention, un tel revêtement dur est formé à partir d'une composition conforme à la description qui en a été faite ci-avant. Autrement considéré, ledit revêtement dur est formé en un alliage dur conforme à l'invention, tel que ce dernier a été décrit ci-avant.

Selon une variante, ladite composition se présentant sous la forme d'un fil, d'une tige ou d'une baguette, le procédé selon l'invention peut être un procédé de soudage à l'arc électrique avec électrode tungstène infusible (TIG), tel que déjà mentionné ci-dessus.

Selon une autre variante plus préférentielle, ladite composition se présente, comme envisagé ci-avant, soit sous la forme d'un mélange d'une première poudre d'alliage et d'une deuxième poudre, dont les grains respectifs sont constitués des première et deuxième composantes présentées précédemment en lien avec la composition selon l'invention, soit d'une poudre d'alliage, dont chaque grain est constitué d'un mélange desdites première et deuxième composantes. Le procédé selon l'invention comprend alors avantageusement au moins une étape de projection laser de ladite composition à la surface dudit substrat. En d'autres termes, le procédé selon l'invention est un procédé de fusion laser par projection de poudre(s) (ou procédé de rechargement par soudage au laser ou « *Laser Metal Déposition* » ou encore « *laser cladding* »). Avantageusement, un tel procédé recourt à l'énergie d'un faisceau laser pour fusionner un matériau d'apport métallique, ici une composition pour la formation d'un alliage de revêtement dur conforme à l'invention, sur une surface métallique par l'interaction entre le faisceau laser et un jet dudit matériau d'apport métallique sous forme poudreuse. Ladite étape de projection laser entraîne également la fusion d'une fine couche superficielle du substrat, ce qui contribue à assurer une liaison métallurgique forte entre le matériau d'apport métallique et le substrat considéré.

Au cours de ladite étape de projection laser, l'apport en composition sous forme poudreuse peut se faire par injection latérale ou, de manière plus avantageuse, par injection coaxiale de ladite composition par rapport au faisceau laser. La technique d'injection coaxiale présente l'intérêt d'être relativement insensible au sens de déplacement relatif du substrat à revêtir et du faisceau laser. Au contraire, dans le cas d'une injection latérale du matériau d'apport métallique sous forme poudreuse, le changement du sens de mouvement relatif du substrat à revêtir et du laser engendre des modifications (localisées) des conditions de dépôt. Ceci mène à l'apparition d'hétérogénéités, de porosités (manque de fusion) ou autres dans le revêtement formé.

De mise en oeuvre relativement aisée et peu coûteuse, un tel procédé par projection laser permet de former de manière précise des dépôts denses, avec une très faible dilution, et une faible déformation du substrat. Avantageusement, le procédé selon l'invention peut comprendre une pluralité d'étapes de projection laser, de sorte à former à la surface du substrat un revêtement dur multicouche, plus ou moins épais. Un tel procédé est en outre particulièrement bien adapté à la formation de revêtement dur à la surface de substrat de géométrie complexe.

L'invention concerne également, en tant que tel, un revêtement en alliage dur sans cobalt, anti-usure et anti-grippage, formé en un alliage dur conforme à l'invention, tel que décrit ci-avant. De préférence, ledit revêtement dur est formé à la surface d'un substrat métallique, tel qu'un siège d'étanchéité de vanne ou de robinet industriel par exemple, selon un procédé conforme à l'invention, tel que décrit ci-avant.

L'invention concerne en outre, une pièce massive en alliage dur (sans cobalt) formée en un alliage dur conforme à l'invention, tel que celui-ci a été présenté ci-avant. Avantageusement formée, fabriquée, intégralement et directement à partir d'une composition conforme à l'invention, telle que décrite précédemment, ladite pièce massive (produit métallurgique) peut constituer une pièce, structurelle ou non, d'un ensemble ou sous-ensemble mécanique. Une telle pièce massive peut avantageusement constituer un élément ou composant de robinetterie industrielle (soupape, obturateur, etc.), en particulier pour application nucléaire.

Afin d'illustrer encore la description qui précède, et les effets avantageux conférés par l'invention, un exemple particulier de réalisation de cette dernière est proposé ci-après.

Selon cet exemple, une composition conforme à l'invention a été préparée à partir :
- d'une première composante consistant en une poudre d'alliage NOREM® de nuance NOREM 02®, et
- d'une deuxième composante en une poudre de titane métal pur.

De manière générale, la composition du NOREM 02®, telle que décrite dans le rapport technique TR-112993 de décembre 1999 de l'*Electric Power Research Institute* (EPRI), est donnée dans le tableau 1 ci-dessous.

**Tableau 1**

| Elément | Cr | C | Mo | Ni | Si | Mn | N | P | S | B | O | Fe |
|---|---|---|---|---|---|---|---|---|---|---|---|---|
| Teneur (% massique) | 23-26 | 1,1-1,35 | 1,8-2,2 | 3,7-5 | 3,1-3,5 | 4,0-5,0 | <0,18 | <0,020 | <0,010 | <0,002 | < 200 ppm | *Balance* |

Plus précisément, la composition de la poudre d'alliage NOREM 02® utilisée dans cet exemple pour former la première composante de la composition est donnée dans le tableau 2 ci-dessous.

**Tableau 2**

| Elément | Cr | C | Mo | Ni | Si | Mn | N | Fe |
|---|---|---|---|---|---|---|---|---|
| Teneur (% massique) | 24,2 | 1,31 | 2 | 4 | 3,13 | 4,4 | 0,15 | *Balance* |

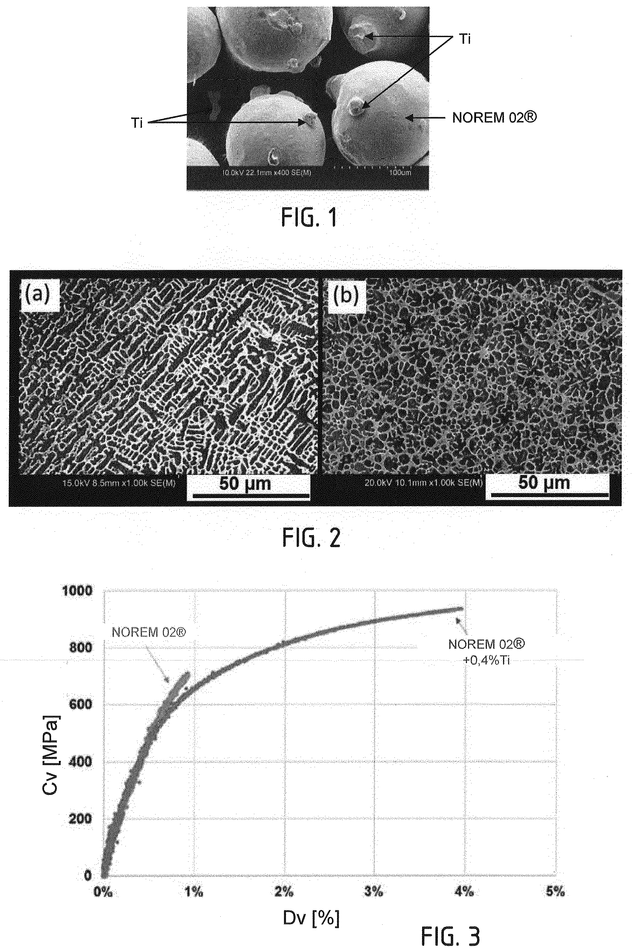

La poudre de titane constituant la deuxième composante de la composition, pure à 99%, a été préparée conformément à ce qui a déjà été décrit plus haut. Les poudres de NOREM 02® et de titane métal ont été mélangées pendant 24 h à l'aide d'un agitateur tridimensionnel, de sorte à obtenir des compositions conformes à l'invention dans lesquelles la quantité de titane métal (2^{ème} composante) correspond respectivement à 0,1 %, 0,2 %, 0,4 %, 0,6 % et 1 % en masse de la poudre de NOREM 02® (première composante). Sur la figure 1, on observe la présence de grains de titane à la surface des grains de NOREM 02®.

Les compositions ainsi préparées ont ensuite été déposées à la surface d'échantillons en acier inoxydable 316L par projection laser coaxiale (puissance Pₗₐₛₑᵣ = 1 000 W, vitesse de déplacement relative V = 0,8 m/min, débit massique de composition Dm = 10 g/min, faisceau laser gaussien de diamètre 3,4 mm).

Pour comparaison, une composition témoin consistant uniquement en une première composante à base d'alliage NOREM 02® (et donc dépourvue de titane) a été préparée et déposée pour former un revêtement témoin à la surface d'échantillons en acier inoxydable 316L dans les mêmes conditions que décrites ci-dessus.

L'évolution de la microstructure du revêtement formé en fonction de la proportion de titane métal ajouté à la poudre d'alliage NOREM 02® a été observée au microscope optique sous grossissement x1000, après attaque chimique pour révéler les différentes phases des zones dendritiques et interdendritiques. Il a été ainsi observé, qu'à 0,1 % de titane métal ajouté, l'alliage formant le revêtement dur après projection laser présente une microstructure mixte, avec des zones colonnaires et des zones équiaxes. L'ajout de 0,2 % de titane métal mène à l'obtention d'une microstructure complètement équiaxe et homogène. A partir de 0,4 % de titane métal ajouté, la microstructure est dentritique équiaxe, voire globulaire, et présente une nouvelle phase au coeur des dendrites, sous forme d'îlots. Cette phase a été identifiée comme étant une phase ferritique (îlots de ferrite δ). A 0,6 % de titane ajouté, la microstructure est globulaire et très semblable à celle obtenue par ajout de 1 % de titane. Il n'apparaît donc pas strictement nécessaire d'aller au-delà de 0,4 % de titane additionnel.

Des analyses microstructurales complémentaires et des tests mécaniques et tribologiques comparatifs ont été réalisés. Les principales observations et conclusions issues de ces analyses et tests peuvent se résumer comme suit.

La comparaison d'images prises par microscope optique (MO) et par microscope électronique à balayage (MEB) montre l'influence de l'ajout de titane métal sur la microstructure de l'alliage de revêtement dur formé. Ainsi, alors que la microstructure d'un alliage de revêtement dur à base de NOREM 02® uniquement (composition témoin) est dendritique colonnaire (figure 2(a)), la microstructure respective de l'alliage formé par ajout de 0,4 % massique de titane métal au NOREM 02® est au contraire dendritique équiaxe ou globulaire (figure 2(b)).

Des analyses en spectroscopie de rayons X à dispersion d'énergie (*Energy Dispersive X-ray Spectroscopy* (EDS)) ont montré une répartition homogène des particules de titane dans la microstructure de l'alliage formé à la surface des échantillons. Ces particules ont une forme géométrique très particulière (cubique) avec une taille qui ne dépasse pas 1 µm. Ces résultats montrent que le titane métal ajouté au NOREM 02® peut être transformé *in-situ* en carbure de titane. En outre, des analyses des phases de cette microstructure, réalisées par microscopie électronique en transmission (MET), font ressortir la présence d'une phase ferrique dans la matrice austénitique.

Par ailleurs, des analyses comparatives par diffraction d'électrons rétrodiffusés (*Electron BackScatter Diffraction* (EBSD)) montrent un raffinement de grain très marqué en présence de titane. En effet, la taille moyenne du grain passe d'environ 30 µm-50 µm pour l'alliage de revêtement dur à base de NOREM 02® formé à partir de la composition témoin, à des tailles de grains qui ne dépassent pas 5 µm dans le cas de l'alliage formé à partir d'une composition, conforme à l'invention, consistant en un mélange de NOREM 02® et de 0,4 % massique de titane métal.

Suivant la norme ISO-6892, des éprouvettes de traction ont été prélevées dans des revêtements épais respectivement formés à partir de la composition témoin (NOREM 02® uniquement) et à partir de la composition susmentionnée qui consiste en un mélange de NOREM 02® et de 0,4 % massique de titane métal. Puis, ces éprouvettes ont été soumises à des essais de traction simple, dans les conditions suivantes : une température égale à 350°C, une vitesse de déformation égale à 10⁻⁴ s⁻¹, une mesure locale de déformation par corrélation d'images.

La courbe de la contrainte vraie Cv en fonction de la déformation vraie Dv, proposée à la figure 3, illustre l'évolution du taux d'allongement et de la résistance à la rupture avec l'ajout de 0,4 % de titane :
- le taux de déformation, d'allongement, passe de 0,9 % (composition témoin) à 4 % environ ;
- la résistance à la rupture augmente de 703 MPa (composition témoin) à 935 MPa.

Un tribomètre rotatif a été utilisé pour tester la résistance à l'usure abrasive à haute température des revêtements durs respectivement formés à partir de la composition témoin, et de la composition consistant en un mélange de NOREM 02® et de 0,4 % massique de titane métal. Les conditions et les paramètres imposés pendant ces tests d'usure sont comme suit: une charge égale à 10 N (soit 1,0 GPa), une vitesse de rotation du pion de 0,005 m/s, une température égale à 300°C, sous ambiance argon et pour une distance parcourue de 50 m. Trois essais ont été réalisés sur chacun des revêtements considérés pour assurer la répétabilité des essais tribologiques.

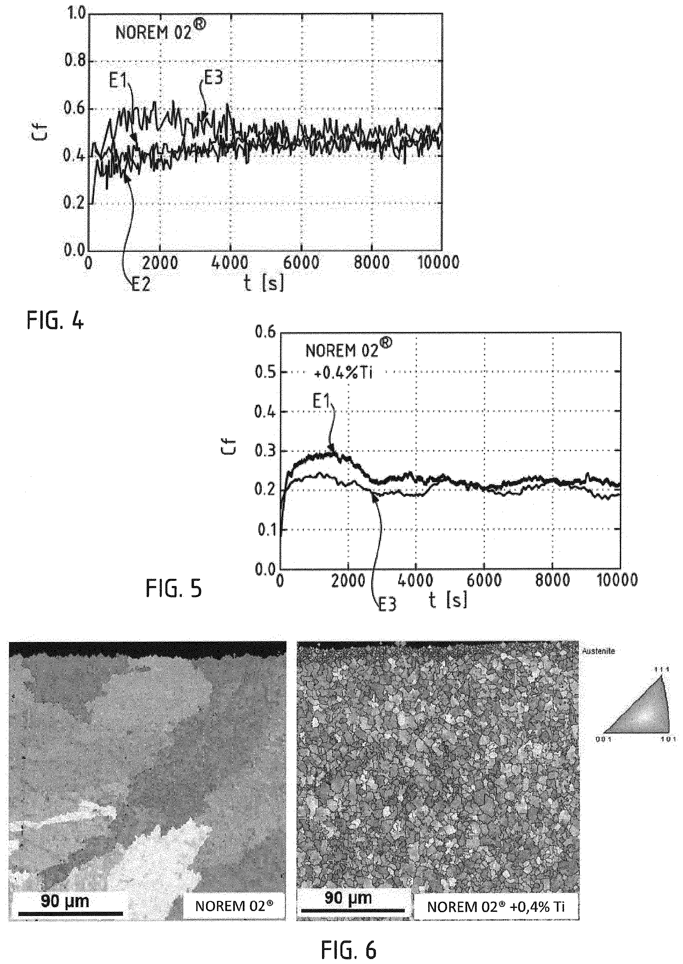

Les figures 4 et 5 illustrent l'évolution au cours des essais (E1, E2, E3) des coefficients de frottement Cf des revêtements considérés en fonction du temps t (en secondes). A température ambiante, le coefficient de frottement du revêtement en NOREM 02® ne dépasse pas 0,28. A 300°C, le coefficient de frottement se stabilise autour de 0,43-0,5 (figure 4). L'augmentation de la température dégrade donc les propriétés tribologiques de l'alliage de revêtement dur à base de NOREM 02® uniquement. En revanche, pour le revêtement issu d'un mélange de NOREM 02® et de 0,4 % massique de titane métal, le coefficient de frottement se stabilise autour de 0,2-0,22 à 300°C (figure 5). Ce coefficient de frottement très faible traduit la bonne résistance à l'usure de ce revêtement conforme à l'invention à haute température.

Des analyses MEB et MO ont été effectuées sur la trace d'usure afin de comprendre l'origine physique et métallurgique derrière cette amélioration du comportement tribologique du revêtement amélioré selon l'invention. Ces analyses font apparaître une trace d'usure assez différente de celle relevée sur les échantillons témoins (NOREM 02® uniquement). En particulier, aucun débris n'est observé sur la surface, laquelle apparait lisse, sans trace d'arrachement de matière.

L'observation d'une coupe transversale de la trace d'usure, présentée à la figure 6 sous la forme d'une image obtenue par diffraction d'électrons rétrodiffusés EBSD, révèle quant à elle l'apparition d'une phase martensitique en-dessous de la trace d'usure. Cette transformation allotropique de la matrice joue un rôle d'un lubrifiant pour la surface. Cette transformation de phase au niveau de la surface supérieure, sur une épaisseur qui ne dépasse pas 10 µm, est visible aux analyses par diffraction d'électrons rétrodiffusés EBSD.

Ces essais montrent ainsi que la mise en oeuvre, conformément à l'invention, d'une composition consistant en du NOREM 02® (première composante) additionné de titane (deuxième composante) contribue avantageusement à, notamment :
- l'obtention d'une microstructure particulièrement affinée (diminution de la taille des grains d'un facteur 10 par rapport au NOREM 02® seul) ;
- l'apparition d'une phase ferritique dans la matrice austénitique, et la formation de particules fines et bien dispersées en carbure de titane ;
- une amélioration des propriétés mécaniques, et en particulier du taux de déformation (amélioration de la ductilité, avec un taux d'allongement est de 4 % à 350°C) et de la résistance à la rupture (augmentation de 30 % environ par rapport NOREM 02® seul);
- une amélioration de la résistance à l'usure abrasive à haute température (coefficient de frottement moyen à 300°C divisé par 2 environ par rapport au NOREM 02® seul).

## Revendications

1. Composition pour la formation d'un alliage dur, à base fer et sans cobalt, constituée d'une première composante consistant, en masse, en 0,7 à 1,5 % de carbone, 2,2 à 4 % de silicium, 20 à 30 % de chrome, 3,0 à 6,0 % de manganèse, 3,7 à 5,0 % de nickel, 1,7 à 4 % de molybdène, moins de 0,3 % d'azote, la quantité restante consistant, à l'exception des impuretés, en fer ; et d'une deuxième composante comprenant du titane.

2. Composition selon la revendication précédente, dans laquelle ladite première composante consiste, en masse, en 1,1 à 1,35 % de carbone, 3,1 à 3,5 % de silicium, 23 à 26 % de chrome, 4,0 à 5,0 % de manganèse, 3,7 à 5,0 % de nickel, 1,8 à 2,2 % de molybdène, moins de 0,18 % d'azote, la quantité restante consistant, à l'exception des impuretés, en fer.

3. Composition selon l'une quelconque des revendications précédentes, dans laquelle ladite deuxième composante consiste, à l'exception des impuretés, en du titane, du nitrure de titane ou du carbure de titane.

4. Composition selon l'une quelconque des revendications précédentes, dans laquelle ladite deuxième composante est présente en une quantité telle que l'alliage dur formé à partir de ladite composition comprend, en masse, entre 0,04 et 1 % de titane, et de préférence entre 0,04 et 0,2 % de titane.

5. Composition selon l'une quelconque des revendications précédentes, laquelle composition se présente sous la forme d'un mélange d'une première poudre d'alliage et d'une deuxième poudre, dont les grains respectifs sont constitués desdites première et deuxième composantes.

6. Composition selon la revendication précédente, dans laquelle ladite deuxième composante est présente en une quantité allant de 0,04 à 1 %, de préférence allant de 0,2 à 1,0 %; de préférence encore allant de 0,2 à 0,6 %, et de manière plus préférentielle encore égale à 0,4 %, en masse de ladite première composante, ladite deuxième composante consistant, à l'exception des impuretés, en du titane.

7. Alliage dur, à base fer et sans cobalt, comprenant en masse de 0,7 à 1,5 % de carbone, de 2,2 à 4,0 % de silicium, de 20 à 30 % de chrome, de 3,0 à 6,0 % de manganèse, de 3,7 à 5,0 % de nickel, de 1,7 à 4,0 % de molybdène, moins de 0,3 % d'azote, et du titane.

8. Alliage selon la revendication précédente, lequel comprend en masse de 1,1 à 1,35 % de carbone, de 3,1 à 3,5 % de silicium, de 23 à 26 % de chrome, de 4,0 à 5,0 % de manganèse, de 3,7 à 5,0 % de nickel, de 1,8 à 2,2 % de molybdène, moins de 0,18 % d'azote et du titane.

9. Alliage selon l'une quelconque des revendications 7 et 8, dans lequel le titane est présent en une quantité allant de 0,04 à 1 % en masse, de préférence de 0,04 à 0,2 % en masse.

10. Alliage selon l'une quelconque des revendications 7 à 9, lequel alliage présente une microstructure dentritique équiaxe ou globulaire, qui comprend une matrice austénitique possédant une phase ferritique et des carbures eutectiques.

11. Alliage selon l'une quelconque des revendications 7 à 10, dans lequel le titane est présent sous forme de carbures de titane, qui sont répartis de manière généralement homogène au sein de la microstructure dudit alliage.

12. Procédé de formation d'un revêtement dur en alliage sans cobalt à la surface d'un substrat métallique à partir d'une composition conforme à l'une quelconque des revendications 1 à 6.

13. Procédé selon la revendication précédente, dans lequel ladite composition est conforme à l'une quelconque des revendications 5 et 6, ledit procédé comprenant au moins une étape de projection laser de ladite composition à la surface dudit substrat.

14. Revêtement en alliage dur sans cobalt, anti-usure et anti-grippage, formé en un alliage dur selon l'une quelconque des revendications 7 à 11.

15. Pièce massive formée en un alliage dur selon l'une quelconque des revendications 7 à 11.
